(19) Europäisches Patentamt
European Patent Office
Office européen des brevets

(11) Publication number : **0 316 687 B1**

(12) **EUROPEAN PATENT SPECIFICATION**

(45) Date of publication of patent specification :
13.11.91 Bulletin 91/46

(51) Int. Cl.⁵ : **C02F 9/00, C02F 1/32,**
**C02F 1/28**

(21) Application number : 88118436.0

(22) Date of filing : 04.11.88

(54) Water treatment apparatus.

(30) Priority : 06.11.87 US 117571

(43) Date of publication of application :
24.05.89 Bulletin 89/21

(45) Publication of the grant of the patent :
13.11.91 Bulletin 91/46

(84) Designated Contracting States :
AT BE CH DE ES FR GB GR IT LI SE

(56) References cited :
DE-A- 2 342 428
DE-A- 3 441 535
US-A- 3 551 091
US-A- 4 694 179

(73) Proprietor : Knight, John B., Jr.
Rt. 3, Box 115
Spanish Fork Utah 84660 (US)

(72) Inventor : Anderson, Ellis
P.O. Box 275
Orem, UT 84057-0275 (US)

(74) Representative : Patentanwälte Grünecker,
Kinkeldey, Stockmair & Partner
Maximilianstrasse 58
W-8000 München 22 (DE)

## Description

The present invention relates to an apparatus for water treatment of the type as outlined in the preambles of claims 1 and 10.

A water treatment apparatus of this type is disclosed in US-A-3551091. US-A-3551091 describes an apparatus for treating water containing a housing and a head secured to the housing. On the top of the head a power box is arranged containing the electrical connections for the wires of the lamp. The wires of the lamp extend to respective male plugs supported on the head and appears to be soldered to these plugs. The receptacles for receiving these plugs are provided at the power box, allowing the power box to be removed from the head together with the receptacles. When a lamp is to be removed for replacement, its wires have to be loosened from the plugs, and the wires of the new lamp have to be soldered to these plugs.

DE-A-2342428 shows a water treatment apparatus containing a lamp which is held by a conventional lamp-socket comprising a threaded sleeve. The threaded sleeve abuts the end face of the hollow elongate quartz sleeve and might be threaded too fast towards the quartz sleeve during a lamp change. In addition, the providing of a conventional lamp-socket for holding the lamp will require a variety of parts for holding the socket and ensuring water tight sealing.

It will therefore be appreciated that there has been a significant need for an apparatus for water treatment in which the lamp is to be changed easily and quickly.

An apparatus fulfilling this demand contains the feature of claims 1 and 10.

Due to the lamp being held within the power box, the lamp can be removed out of the sleeve by dismantling the power box off from the head. No soldered connection is provided which has to be disconnected or renewed.

Suitable and advantageous developments of the inventive apparatuses are disclosed in the subclaims.

In the drawings :

The embodiment of the invention which is presently best known will be described and illustrated in conjunction with the drawings in which :

FIG. 1 is a perspective view of the assembled apparatus ;

FIG. 2 is an exploded perspective view of the apparatus ; and

FIG. 3 is a partial sectional view of the assembled apparatus on the line 3--3 of FIG. 1 on a somewhat larger scale.

Referring now to the drawings :

The presently best known embodiment of the invention comprises, in combination, a head 10 having a water inlet 12 and a water outlet 14, and an assembly of parts mounted thereon including filtration means 18 and irradiation means 20, and a removable housing 22 having an open end and a closed end surrounding said filtration and irradiation means having a watertight connection to said head 10. The apparatus is adapted to be installed in a water line having a connection to a water supply 24 and to a water utilization system 26, with the supply side of the water line connected to the water inlet 12 and the water outlet 14 connected to the water utilization system 26.

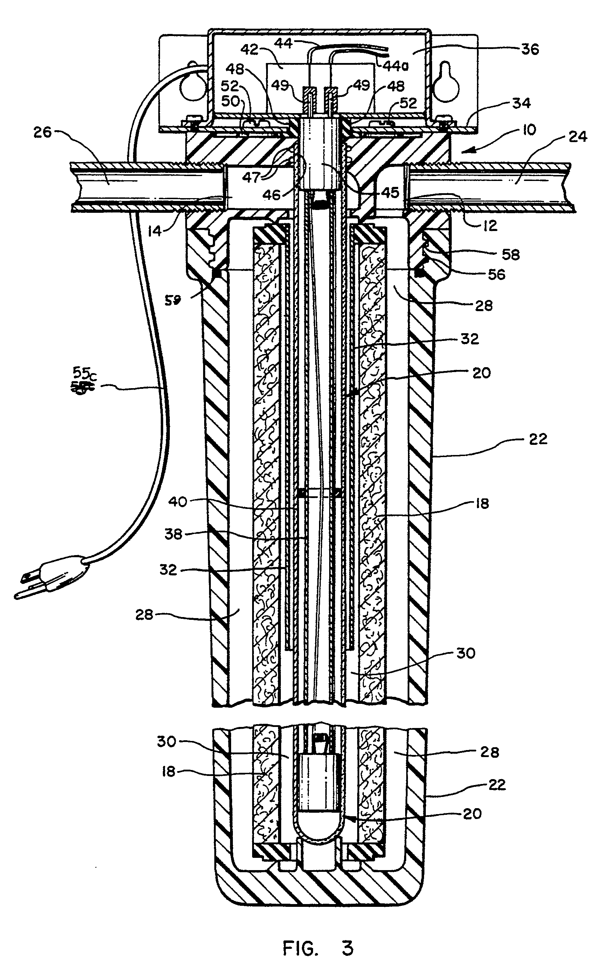

The housing 22 and head 10 may have any desired configuration but the preferred configuration is circular in cross section, as shown in the drawings. The filtration means 18 may be any one of a number of different types including mechanical fibers and/or chemical adsorption materials and is preferably an activated carbon type which is annular in cross section having non-porous annular ends 19 making water-tight engagement with said head 10 and said bottom wall 25, as seen in FIG. 3, with sheets of filter paper covering the inner and outer surfaces enclosing the activated carbon between them. The filter unit has an outer diameter somewhat less than the inner diameter of the housing 22 to provide an outer water channel 28 between them. The length of the filter must be adequate to purify the stream of water as it flows from channel 28 through the filter from its outer surface to and out of the inner surface. Lengths between 20,3 to 63,5 cm (8 to 25 inches) have been found satisfactory in use.

The inner diameter of the filtration means is somewhat larger than the outer diameter of the irradiation means 20 to provide an inner water channel 30 between them into which the water flows after passing through the filter.

In passing through the filtration means the water is purified by mechanical removal of suspended particles which are caught and held mechanically in the particles of activated carbon which also purify by chemical adsorption.

In flowing through inner channel 30, which preferably is of short radial length, the water is sanitized by exposure to ultraviolet rays from the irradiation means 20.

In order to assure a path of flow of all the filtered water in inner channel 30 which is long enough to effect thorough sterilization by irradiation, a flow directing means 32 is preferably installed in the outlet end of the inner channel to force water emerging into channel 30 from the filter 18 to flow in the part of water channel 30 between the filter 18 and the flow control means 32 toward the closed end of the housing 22 for a significant distance, e.g., at least about half of its length and preferably almost its entire length. At the inner end of the flow directing means 32 the water from that portion of the filter opposite the flow directing means 32 joins the water which has emerged from the other part of the filter 18 and the combined streams flow toward the head in that portion of the channel 30 within the flow directing means 32 to and out of the opening 33 into water outlet 14. The flow directing means, which preferably is a hollow cylinder of proper diameter to provide water channels on each side of it, may be made of any desired material but preferably is made of material which is transparent to the ultraviolet rays, e.g., quartz, U-V-transparent plastic, e.g., Teflon, and the like.

A bracket 34 is provided to support a power supply box 36 on the head 10, as later described, to receive electric power of usual household voltage, e.g., 110 to 120 volts, through a power connection 55c and to transform it into a proper higher voltage source of power, which will vary according to lamp design.

The irradiation means 20 comprises an ultraviolet lamp 38, e.g., an ozone or non-ozone lamp, and a quartz sleeve 40 which is transparent to U-V rays.

The quartz sleeve 40 is frictionally held in the head 10 in an accurately machined hole 46 slightly larger in diameter than the outside diameter of sleeve 40 and provided with grooves for O-rings 47. This construction assures a water-tight frictional connection of the quartz sleeve 40 with the head 10, permitting these parts to be handled freely as a unit.

The lamp 38 is frictionally held in power box 36 by means of a flanged rubber sleeve 48 which is secured to bracket 34. It tightly engages the lamp terminal 45. Terminal 45 is provided with the customary power prongs 49 which go into electrical contacts in electrical receptacle 42 connected by lines 44 and 44a to the high voltage terminal (not shown) within power box 36. This electrical connection further frictionally supports lamp 38 in the power box 36. The frictional connection of lamp 38 in power box 36 permits the lamp to be removed from quartz sleeve 40 while the sleeve is held in water-tight connection in the head 10. This water-tight connection is an important feature of the invention because it permits the lamp to be removed from or inserted in sleeve 40, as desired, without affecting in any way the filtering function of the apparatus. This is of particular importance in the multiple unit utilization of apparatuses, as later described.

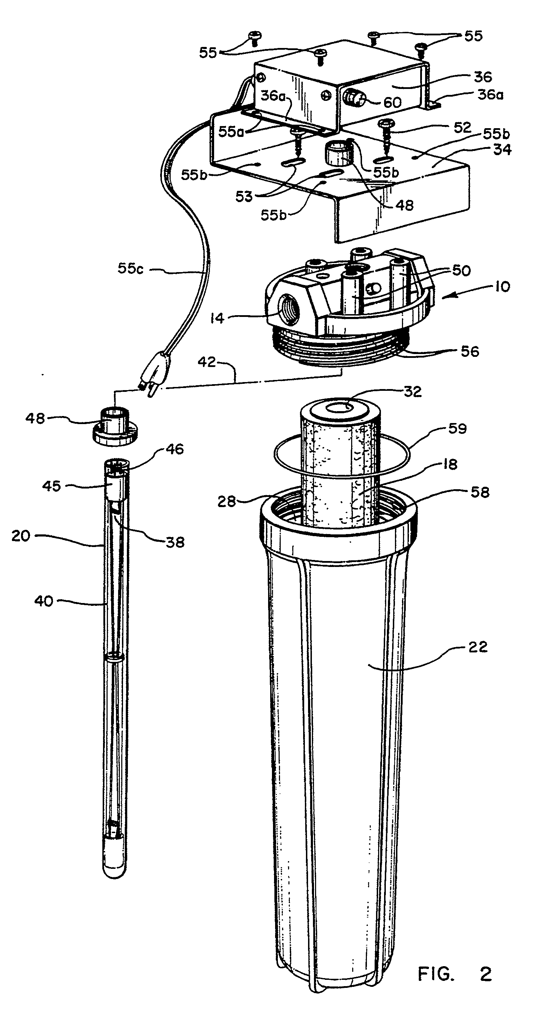

The bracket 34 is adapted to be secured to the head on integral posts 50 by means of bolts 52 passing through holes 53 in the bracket aligned with the screw recesses in the ends of the posts 50. It also has a central hole through which electrical connection is made to lamp 38, as best seen in FIG. 2.

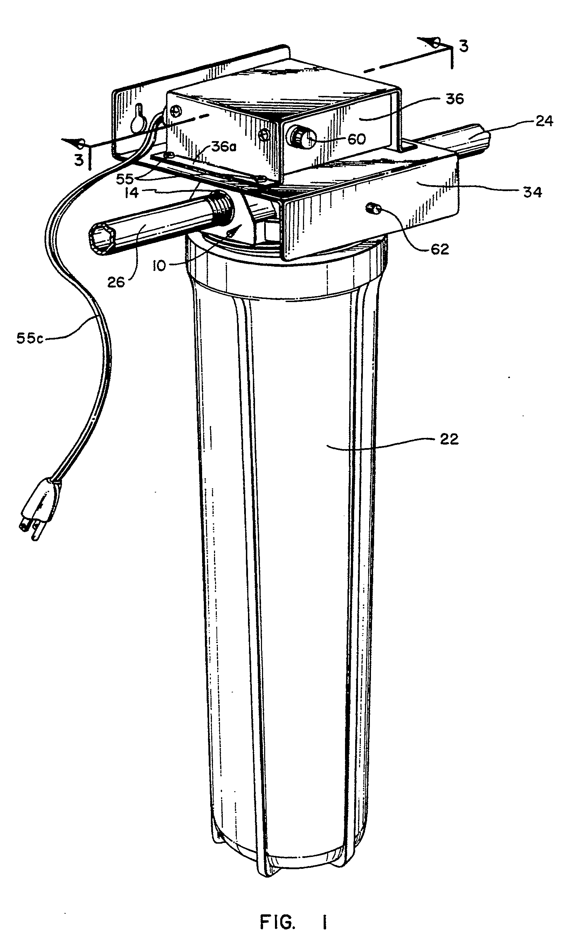

The power supply box 36 is fastened to bracket 34 in any suitable manner so that it is located above the head 10, e.g., by bolts 55 passing through holes 55a in flange 36a into threaded openings 55b in bracket 34. The power supply box 36 receives current through supply line 55c from a commercial source and supplies it at proper higher voltage to the lamp 38 by means of the receptacle 42 and supply lines 44 and 44a. A fuse 60 may be put in line 55c, if desired. It is also desirable to provide means to indicate when lamp 38 is operating. For example, a crystal piece 62 may be mounted in the depending flange of bracket 34, as seen in FIG. 1, behind which is a light passage extending from the surface of head 10 into the interior of the quartz sleeve 40. When lamp 38 is illuminated, the light passes upwardly through the light passage and illuminates the crystal piece 62. In some cases it may be desired to provide remote indication of the illumination of lamp 38 and this may be done by electronic means that operates some kind of indicator at a remote location when lamp 38 is operating.

The head 10 and housing 22 may be connected together by any suitable means, e.g., an internal thread 56 in the head 10 and an external thread 58 on the housing, as seen in FIGS. 2 and 3, with an O-ring 59 between them to assure water-tight connection between them.

The parts may be made of any material suitable for exposure to water without undergoing corrosion. A moldable and machinable plastic, such as high density polypropylene, is a suitable material from which to mold the head and housing because it is machinable, rust and corrosion resistant, and it may be given added strength, if desired, by reinforcing material embedded in it. Stainless steel may also be used but is not as readily workable as plastic to machine the recess 46 for the quartz tube and the O-rings 47.

The apparatus as described above may be used singly or in multiples of two or more apparatuses with the water supply connected to the different apparatuses in series or parallel. This multiple use of apparatuses is advantageous when water contains a high content of filterable pollution because enough pieces of apparatus may be connected together to purify the most contaminated water. The number of the pieces of apparatus in a multiple filtering assemblage which have an associated lamp may be adjusted in accordance with the bacterial content of the water being treated, and the number of apparatuses having irradiation means therein may vary from one to as many as there are pieces of apparatus in the multiple assemblage.

## Claims

1. An apparatus for water treatment comprising in combination :

a head (10) having a water inlet (12) adapted to be connected to a water supply line (24), a water outlet (14) adapted to be connected to a water utilization system (26), and an assembly of water treating means mounted thereon ;

a removable housing (22) having an open end (23) and a closed end (25) surrounding said water treating means making a water-tight connection at said open end with said head (10) ;

said assembly of water treating means comprising an annular filtration means (18) within said housing (22) to provide an outer water channel (28) between it and the housing (22) communicating with said water inlet (12) to conduct water entering said outer channel (28) along the periphery of said filtration means (18) and through it into an inner water channel (30) communicating with said water outlet (14) ;

said assembly of water treating means further comprising an irradiation means (20) containing a hollow elongate sleeve (40) being fluid-tightly received within an opening (46) of said head (10), and an irradiation lamp (38) received within said sleeve (40),

a power box (36) being located on said head (10) and having a receptacle (42) adapted for an electrical connection of said lamp (38),

said power box (36) and said receptacle (42) being removable from said head (10) without disturbing the fluid flow through the channels (28, 30),

characterised in that said receptacle (42) is adapted for a frictional support of said lamp (38) in said power box (36).

2. An apparatus as set forth in claim 1 in which said annular filtration means (18) contains activated charcoal material.

3. An apparatus as set forth in claim 1 or 2 in which a flow direction means (32) in the form of a cylinder which is shorter than said sleeve (40) is provided to compel the water passing through the said filtration means (18) to flow away from said head (10) for the length of said flow directing means (32) and then merge with water flowing through said filtration means (18) beyond said flow directing means (32) and flow out of the apparatus through said water outlet channel (14, 26) in said head.

4. An apparatus as set forth in any one of Claims 1 to 3 in which said head (10) and said housing (22) are made of molded plastic.

5. An apparatus as claimed in any one of Claims 1 to 4 characterised in that said lamp (38) further is frictionally held in the power box (36) by means of a flanged rubber sleeve (48) which is secured to the head (10).

6. An apparatus as claimed in Claim 5 characterised in that said rubber sleeve (48) is held by a bracket (34) being secured to the head (10).

7. An apparatus as claimed in Claim 6 characterised in that said power box (36) is secured to the bracket (34) so that said power box (36) can be removed from the head (10) independently from the bracket (34).

8. An apparatus as claimed in any one of Claims 1 to 7 characterised in that said sleeve (40) is sealed within said opening (46) of said head (10) by O-rings (47).

9. An apparatus as set forth in any one of Claims 1 to 8 in which said head (10) is provided with a light passage (62) adapted to give an external visual indication from the interior of the apparatus whether the lamp (38) is operating.

10. An apparatus for water treatment comprising in combination :

a head (10) having a water inlet (12) adapted to be connected to a water supply line (24), a water outlet (14) adapted to be connected to a water utilisation system (26), and an assembly of water treating means mounted thereon ;

a removable housing (22) having an open end (23) and a closed end (25) surrounding said water treating means making a water-tight connection at said open end with said head (10) ;

said assembly of water treating means comprising an annular filtration means (18) within said housing (22) to provide an outer water channel (28) between it and the housing (22) communicating with said water inlet (12) to conduct water entering said outer channel (28) along the periphery of said filtration means (18) and through it into an inner water channel (30) communicating with said water outlet (14) ;

said assembly of water treating means further comprising an irradiation means (20) containing a hollow elongate sleeve (40) being fluid-tightly received within an opening (46) of said head (10), and an irradiation lamp (38) received within said sleeve (40) ;

a power box (36) being located on said head (10) and having a receptacle (42) adapted to receiving power prongs (49) for electrical connection of said lamp (38)

said power box (36) and said receptacle (42) being removable from said head (10) without disturbing the fluid flow through the channels (28, 30) ;

characterised in that said receptacle (42) is arranged vertically above said lamp (38) and is adapted for a frictional support of said lamp (38) when said power prongs (49) being received in said receptacle (42), said lamp (38) being further frictionally held by a rubber sleeve (48) attached to said head (10) axially aligned with said opening (46) of said head (10).

11. The apparatus of claim 10 wherein said rubber sleeve (48) is attached to said head (10) above and vertically distant to said hollow elongate sleeve (40).

12. The apparatus of claim 10 or 11 wherein said rubber sleeve (48) is attached to said head (10) by a bracket (34), said power box (36) being removably attached to said bracket (34).

## Patentansprüche

1. Vorrichtung zum Behandeln von Wasser mit den Kombinationsmerkmalen :

einem Kopf (10) mit einem Wassereinlaß (12) zum Verbinden mit einer Wasserversorgungsleitung (24), einem Wasserauslaß (14) zum Verbinden mit einem Wasserverbrauchssystem (26), und einer daran angeordneten Einheit einer Wasserbehandlungseinrichtung ;

ein entfernbares Gehäuse (22) mit einem offenen Ende (23) und einem geschlossenen Ende (25), das die Wasserbehandlungseinrichtung für eine wasserdichte Verbindung am offenen Ende mit dem Kopf (10) umgibt ;

wobei die Einheit der Wasserbehandlungseinrichtung eine ringförmige Filtereinrichtung (18) im Gehäuse (22) enthält, um einen äußeren Wasserkanal (28) zwischen ihm und dem Gehäuse (22) vorzusehen, der mit dem Wassereinlaß (12) in Verbindung steht, um das in den äußeren Kanal (28) eintretende Wasser entlang dem Umfang der Filtereinrichtung (18) und durch sie hindurch in einen inneren Wasserkanal (30) zu leiten, der mit dem Wasserauslaß (14) in Verbindung steht ;

wobei die Einheit der Wasserbehandlungseinrichtung weiterhin eine Bestrahlungseinrichtung (20) aufweist, die eine hohle, langgestreckte Hülse (40), die flüssigkeitsdicht in einer Öffnung (46) des Kopfes (10) aufgenommen ist, und eine Bestrahlungslampe (38) enthält, die innerhalb der Hülse (40) aufgenommen ist, wobei ein Energieversorgungskasten (36) am Kopf (10) angeordnet ist und eine Aufnahme (42) für die elektrische Verbindung der Lampe (38) aufweist,

wobei der Energieversorgungskasten (36) und die Aufnahme (42) vom Kopf (10) zu entfernen sind, ohne den Flüssigkeitsstrom durch die Kanäle (28, 30) zu stören, **dadurch gekennzeichnet,**

daß die Aufnahme (42) zum reibschlüssigen Aufnehmen der Lampe (38) im Energieversorgungskasten (36) ausgebildet ist.

2. Vorrichtung nach Anspruch 1, bei dem die ringförmige Filtereinrichtung (18) Aktivkohlematerial enthält.

3. Vorrichtung nach Anspruch 1 oder 2, bei der eine Strömungsleiteinrichtung (32) in Form eines Zylinders vorgesehen ist, der kürzer als die Hülse (40) ist und das durch die Filtereinrichtung (18) hindurchtretende Wasser zwing, vom Kopf (10) über die Länge der Strömungsleiteinrichtung (32) wegzufließen, und sich dann mit dem jenseits der Strömungsleiteinrichtung (32) durch die Filtereinrichtung (18) hindurchtretenden Wasser zu mischen und durch den Wasserauslaßkanal (14, 26) im Kopf aus der Vorrichtung auszufließen.

4. Vorrichtung nach einem der Ansprüche 1 bis 3, in der der Kopf (10) und das Gehäuse (22) aus gegossenem Kunststoff bestehen.

5. Vorrichtung nach einem der Ansprüche 1 bis 4, **dadurch gekennzeichnet,** daß die Lampe (38) weiterhin durch eine mit einem Flansch versehenen, am Kopf (10) befestigten Gummihülse (48) reibschlüssig im Energieversorgungskasten (36) gehalten ist.

6. Vorrichtung nach Anspruch 5, **dadurch gekennzeichnet,** daß die Gummihülse (48) durch eine am Kopf (10) befestigte Klammer (34) gehalten ist.

7. Vorrichtung nach Anspruch 6, **dadurch gekennzeichnet,** daß der Energieversorgungskasten (36) derart an der Klammer (34) befestigt ist, daß der Energieversorgungskasten (36) unabhängig von der Klammer (34) vom Kopf (10) entfernt werden kann.

8. Vorrichtung nach einem der Ansprüche 1 bis 7, **dadurch gekennzeichnet,** daß die Hülse (40) in der Öffnung (46) des Kopfes (10) durch O-Ringe (47) abgedichtet ist.

9. Vorrichtung nach einem der Ansprüche 1 bis 8, in der der Kopf (10) mit einer Lichtpassage (62) versehen ist, um eine eherne, visuelle bezeige aus dem Inneren der Vorrichtung zu geben, ob die Lampe (38) funktioniert.

10. Vorrichtung zum Behandeln von Wasser mit den Kombinationsmerkmalen :

einem Kopf (10) mit einem Wassereinlaß (12) zum Verbinden mit einer Wasserversorgungsleitung (24), einem Wasserauslaß (14) zum Verbinden mit einem Wasserverbrauchssystem (26), und einer daran angeordneten Einheit einer Wasserbehandlungseinrichtung ;

ein entfernbares Gehäuse (22) mit einem offenen Ende (23) und einem geschlossenen Ende (25), das die Wasserbehandlungseinrichtung für eine wasserdichte Verbindung am offenen Ende mit dem Kopf (10) umgibt ;

wobei die Einheit der Wasserbehandlungseinrichtung eine ringförmige Filtereinrichtung (18) im Gehäuse (22) enthält, um einen äußeren Wasserkanal (28) zwischen ihm und dem Gehäuse (22) vorzusehen, der mit dem Wassereinlaß (12) in Verbindung steht, um das in den äußeren Kanal (28) eintretende Wasser entlang dem Umfang der Filtereinrichtung (18) und durch sie hindurch in einen inneren Wasserkanal (30) zu leiten, der mit dem Wasserauslaß (14) in Verbindung steht ;

wobei die Einheit der Wasserbehandlungseinrichtung weiterhin eine Bestrahlungseinrichtung (20) aufweist, die eine hohle, langgestreckte Hülse (40), die flüssigkeitsdicht in einer Öffnung (46) des Kopfes (10) aufgenommen ist, und eine Bestrahlungslampe (38) enthält, die innerhalb der Hülse (40) aufgenommen ist ;

wobei ein Energieversorgungskasten (36) am Kopf (10) angeordnet ist und eine Aufnahme (42) zur Aufnahme von Steckkontakten (49) für eine elektrische Verbindung der Lampe (38) aufweist, wobei der Energieverso ,ungskasten. (36) und die Aufnahme (42) vom Kopf (10) entfernbar sind, ohne den Flüssigkeitsstrom durch die Kanäle (28, 30) zu stören ; **dadurch gekennzeichnet,** daß die Aufnahme (42) vertikal über der Lampe (38) angeordnet ist und für eine reibschlüssige Verbindung mit der Lampe (38) ausgelegt ist, wenn die Steckkontakte (49) in der Aufnahme (42) aufgenommen sind, wobei die Lampe (38) weiterhin reibschlüssig durch eine Gummihülse (48) gehalten ist, die in axialer Ausrichtung mit der Öffnung (46) des Kopfes (10) mit dem Kopf (10) verbunden ist.

11. Vorrichtung nach Anspruch 10, wobei die Gummihülse (48) am Kopf (10) oberhalb und in Vertikalrichtung beabstandet zur hohlen, langgestreckten Hülse (40) angeordnet ist.

12. Vorrichtung nach Anspruch 10 oder 11, wobei die Gummihülse (48) durch eine Klammer (34) am Kopf (10) befestigt ist, wobei der Energieversorgungskasten (36) an der Klammer (34) entfernbar angeordnet ist.

## Revendications

1. Appareil pour le traitement de l'eau comprenant en combinaison :
   une tête (10) comportant une arrivée d'eau (12) adaptée pour être raccordée à une conduite d'alimentation en eau (24), une sortie d'eau (14) adaptée pour être raccordée à un système d'utilisation d'eau (26), et un assemblage de moyens de traitement de l'eau montés sur celle-ci ;
   une enveloppe amovible (22), ayant une extrémité ouverte (23) et une extrémité fermée (25), entourant lesdits moyens de traitement de l'eau en formant un raccordement étanche à l'eau au niveau de ladite extrémité ouverte à ladite tête (10) ;
   ledit assemblage de moyens de traitement de l'eau comprenant un moyen de filtration annulaire (18) à l'intérieur de ladite enveloppe (22) pour former un canal d'eau extérieur (28) entre lui et l'enveloppe (22) communiquant avec ladite arrivée d'eau (12) pour conduire l'eau entrant dans ledit canal extérieur (28) le long de la périphérie dudit moyen de filtration (18) et à travers celui-ci dans un canal d'eau intérieur (30) communiquant avec ladite sortie d'eau (14) ;
   ledit assemblage de moyens de traitement de l'eau comprenant en outre un moyen d'irradiation (20) contenant un manchon creux allongé (40) qui est reçu de manière étanche au fluide à l'intérieur d'une ouverture (46) de ladite tête (10), et une lampe à irradiation (38) reçue dans ledit manchon (40),

une boîte d'alimentation (36) étant placée sur ladite tête (10) et ayant une alvéole (42) adaptée pour connecter électriquement ladite lampe (38), ladite boîte d'alimentation (36) et ladite alvéole (42) pouvant être retirées de ladite tête (10) sans gêner l'écoulement du fluide à travers les canaux (28, 30), caractérisé en ce que ladite alvéole (42) est adaptée pour supporter par frottement ladite lampe (38) dans ladite boîte d'alimentation (36).

2. Appareil selon la revendication 1, dans lequel ledit moyen de filtration annulaire (18) contient du charbon actif.

3. Appareil selon la revendication 1 ou 2, dans lequel un moyen de direction (32) de l'écoulement sous la forme d'un cylindre qui est plus court que ledit manchon (40) est prévu pour forcer l'eau traversant ledit moyen de filtration (18) à s'écouler de ladite tête (10) sur la longueur dudit moyen de direction (32) de l'écoulement et à se joindre ensuite à l'eau traversant ledit moyen de filtration (18) au-delà dudit moyen de direction (32) de l'écoulement et à sortir de l'appareil par ledit canal de sortie d'eau (14, 26) dans ladite tête.

4. Appareil selon l'une quelconque des revendications 1 à 3, dans lequel ladite tête (10) et ladite enveloppe (22) sont faites de plastique moulé.

5. Appareil selon l'une quelconque des revendications 1 à 4, caractérisé en ce que ladite lampe (38) est en outre maintenue par frottement dans la boîte d'alimentation (36) au moyen d'une douille à collet en caoutchouc (48) qui est fixée à la tête (10).

6. Appareil selon la revendication 5, caractérisé en ce que ladite douille en caoutchouc (48) est maintenue par une console (34) qui est fixée à la tête (10).

7. Appareil selon la revendication 6, caractérisé en ce que ladite boîte d'alimentation (36) est fixée à la console (34) de telle sorte que ladite boîte d'alimentation (36) puisse être retirée de la tête (10) indépendamment de la console (34).

8. Appareil selon l'une quelconque des revendications 1 à 7, caractérisé en ce que ledit manchon (40) est maintenu hermétiquement dans ladite ouverture (46) de ladite tête (10) par des joints toriques (47).

9. Appareil selon l'une quelconque des revendications 1 à 8, dans lequel ladite tête (10) est munie d'un passage lumineux (62) adapté pour donner une indication visuelle externe de l'intérieur de l'appareil pour savoir si la lampe (38) fonctionne.

10. Appareil pour le traitement de l'eau comprenant en combinaison :
   une tête (10) ayant une arrivée d'eau (12) adaptée pour être raccordée à une conduite d'alimentation en eau (24), une sortie d'eau (14) adaptée pour être raccordée à un système d'utilisation de l'eau (26), et un assemblage de moyens de traitement de l'eau montés sur celle-ci ;
   une enveloppe amovible (22) ayant une extrémité ouverte (23) et une extrémité fermée (25) entourant lesdits moyens de traitement de l'eau en formant un raccordement étanche à l'eau au niveau de ladite extrémité ouverte avec ladite tête (10) ; ledit assemblage de moyens de traitement de l'eau comprenant un moyen de filtration annulaire (18) à l'intérieur de ladite enveloppe (22) pour former un canal d'eau extérieur (28) entre lui et l'enveloppe (22) communiquant avec ladite arrivée d'eau (12) pour conduire l'eau entrant dans ledit canal extérieur (28) le long de la périphérie dudit moyen de filtration (18) et à travers celui-ci dans un canal d'eau intérieur (30) communiquant avec ladite sortie d'eau (14) ; ledit assemblage de moyens de traitement de l'eau comprenant en outre un moyen d'irradiation (20) contenant un manchon creux allongé (40) qui est reçu de manière étanche au fluide à l'intérieur d'une ouverture (46) de ladite tête (10), et une lampe à irradiation (38) reçue dans ledit manchon (40) ; une boîte d'alimentation (36) étant placée sur ladite tête (10) et ayant une alvéole (42) adaptée pour recevoir des broches électriques (49) pour raccorder électriquement ladite lampe (38) ; ladite boîte d'alimentation (36) et ladite alvéole (42) pouvant être retirées de ladite tête (10) sans gêner l'écoulement du fluide à travers les canaux (28, 30) ; caractérisé en ce que ladite alvéole (42) est disposée verticalement au-dessus de ladite lampe (38) et est adaptée pour supporter par frottement ladite lampe (38) lorsque lesdites broches électriques (49) sont reçues dans ladite alvéole (42), ladite lampe (38) étant en outre maintenue par frottement par une douille en caoutchouc (48) fixée à ladite tête (10) en étant alignée axialement avec ladite ouverture (46) de ladite tête (10).

11. Appareil selon la revendication 10, dans lequel ladite douille en caoutchouc (48) est fixée à ladite tête (10) au-dessus dudit manchon creux allongé (40) et en étant éloignée verticalement de celui-ci.

12. Appareil selon la revendication 10 ou 11, dans lequel ladite douille en caoutchouc (48) est fixée à ladite tête (10) par une console (34), ladite boîte d'alimentation (36) étant fixée de façon amovible à ladite console (34).

FIG. 1

FIG. 2

FIG. 3